# EUROPEAN PATENT APPLICATION

(11) **EP 3 136 620 A1**
(43) Date of publication of application: **01.03.2017**
(21) Application number: 15182641.9
(22) Date of filing: 27.08.2015
(51) Int. Cl.: H04B 10/079

(54) **OPTICAL NETWORK FAULT MANAGEMENT**

(71) Applicant: BRITISH TELECOMMUNICATIONS public limited company, London EC1A 7AJ (GB)
(72) Inventor: The designation of the inventor has not yet been filed
(74) Representative: Tuckett, William John

(57) **Abstract**

A method of operating an optical link comprising a first node having a transmitter optically connected to a second node having a microcontroller and a power supply, comprising:
- turning off the transmitter of the first node to cause a loss of signal received at the second node, and
- initiating a restart of either of or both the microcontroller or the power supply at the second node in response to the loss of signal.

## Description

This invention relates to methods, apparatus and systems related to the management and resolution of faults affecting optical transceivers in a telecommunications network which may cause loss of functionality, in particular but not limited to the impairment or loss of communications for in-band management functions.

In optical networks, management and configuration of services and nodes can be carried out by transmitting messages to the devices being managed, which pertain to, for example:
- transceiver status
- service provision (e.g. speed, committed rate information (CIR), traffic shaping)
- fault management
- alarm data collection (e.g. fan alarms, power supply alarms)
- traffic data (e.g. number of packets sent)
- software or firmware patching and upgrading.

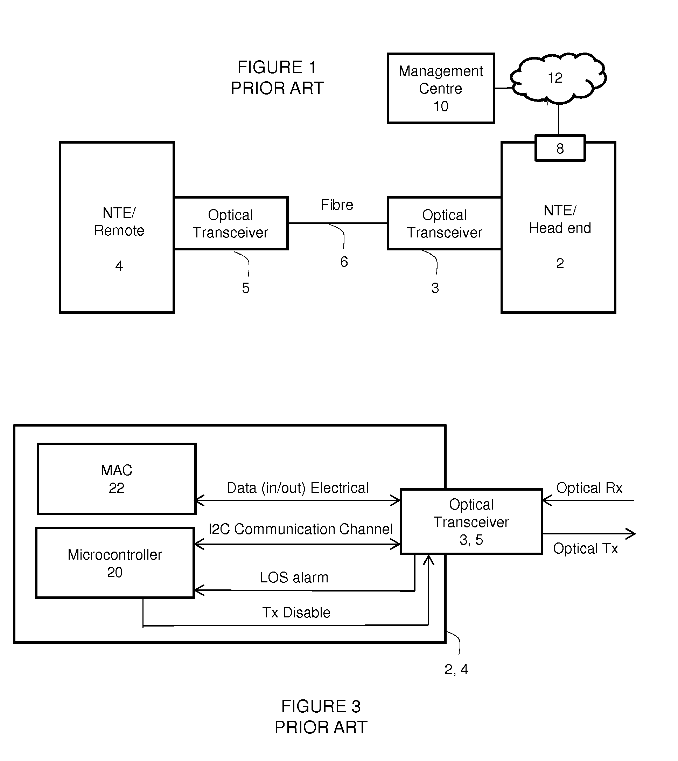

Such messages can be carried on dedicated or separate channels by way of out-of-band management techniques, or by in-band management methods. In the latter, the messages are transmitted on the same fibre link as that carry data signals to the devices or nodes being managed. In a known network configuration such as that shown in Figure 1, two nodes in the form of network termination equipment (NTE) devices -- one at a "head end" (2) and the other at a "remote end" (4) -- are connected to each other by a fibre link (6) to provide a point-to-point service via their respective optical transceivers (3, 5). In this arrangement, the near or head end NTE is further connected by a management functions component usually in the form of a dedicated management card (8) to a separate management centre or network (10), typically via a broadband platform (12). The management functions component enables provision of in-band management to both the head end NTE and the remote end NTE. Services based on Synchronous Digital Hierarchy (SDH) and Ethernet and the like, are examples of such point-to-point connections over fibre which use in-band management.

As might be expected, a loss of connection between the NTE nodes would result in inability to transmit data of any kind (i.e. both customer data as well as management data) between the nodes. In such cases, loss of connection or signal (LOS) alarms are typically generated at the node which has lost connection, to alert the management system and/or the network operator that optical power has been lost, to enable restoration of the connection. As is known, an LOS alarm indicates that a signal or connection has been dropped or terminated at a node. In some cases however, the remote node can suffer loss of management functions even if the connection is maintained between the node ends. In other words, the remote NTE remains able to send and receive customer data even though no management messages can get through, and the node is deemed to be operating normally. The node at the remote end may reach this state for a variety of reasons, such as the malfunctioning of the NTE following from software bugs (from patching, provisioning and general bugs) and corrupted data or software. It can arise also when an NTE recovers into an unknown state from an unexpected loss of power. The result of this is that such a remote end NTE is "unreachable" by the management centre, even if its corresponding head end NTE remains manageable.

Some problems unavoidably require an expensive site visit, such as those caused by overheating following a temperature rise in the environment of the node, or a failure of a backup power supply. In many cases however, management functionality at the remote end can be restored by the simple expedient of powering the NTE off and then on again. However, the system is unaware that a problem exists at all, so the usual methods of restarting or resetting the NTE cannot be used. Moreover, the customer's ready cooperation to restart the NTE at his end cannot be expected because he is not suffering from loss of service (in terms of ability to send and receive customer data). Such a customer would be unlikely to see the need to restart or reset the NTE, especially as doing so would result in the loss of service. Despatching an engineer to the customer's premises for the simple purpose of turning the NTE off and on again is wasteful of resources. It would be preferable to reset the NTE remotely from the head end, but management signals to achieve this are exactly the kind of messages which the affected remote end terminal is unable to receive.

A possible solution is to use an SNMP (Simple Network Management Protocol) trap or HTTPS (Hypertext Transfer Protocol Secure)-based techniques to remotely reset the NTE. These can take the form of either a "hard" reset in which the NTE is completely powered down so that customer service is also lost, or a "soft" reset which just resets the management function without affecting data signals. These methods operate in the application layer (OSI model layer 7), and can successfully obtain the reset of the remote end NTE if the cause of the problem also lies in the application layer and lower. Such approaches are not fool-proof however, for example the SNMP parameters (such as the port or read/write settings) may have been incorrectly set, so that the SNMP manager will be unable to communicate with the agent.

Management functions can also be lost owing to a variety of reasons which cannot be addressed by the above solutions, for example where the problem is caused by blockage of the use of a communication application or protocol, a communication for a reset sent by those means cannot be received. Another situation is where the management application or the application which performs the reset is itself corrupted. The management software can also itself enter an indeterminable state due to a software patch with corrupted data. An application of a remote software patch may fail to complete fully so that it times out.

It would be desirable to address the problem of lost in-band management at a remote node caused by a variety of problems which may reside outside of the application layer of the OSI model.

According to the invention there is provided a method of operating an optical link comprising a first node having a transmitter optically connected to a second node having a microcontroller and a power supply, comprising:
- turning off the transmitter of the first node to cause a loss of signal received at the second node, and
- initiating a restart of either of or both the microcontroller or the power supply at the second node in response to the loss of signal.

In the invention, the light output by the transmitter at the first, head, end is turned off so that the signal at the second, remote, end of the optical link is lost. This acts as a signal to the remote end node and forces the remote end node to take action, i.e. to restart either the microcontroller, the power supply unit, or both, in dependence on the type of problem causing the loss of management functions. The restarting process in the case of the microcontroller serves to "reset" it so that it resumes "normal" operation in a stable and manageable state and so restarting includes using high level interrupt techniques or by using a watchdog timer as will be detailed below, as well as to power it off and on again in an extreme situation where other approaches fail to solve the problem. Restarting the power supply unit typically involves simply turning it off and on again. If the cause is such that the problem can be resolved by resetting the node and recovering the previous configuration will be recovered (as will be detailed below), the need to despatch an engineer is avoided. In the context of remote end NTEs which become unreachable for management functions even though transmission of customer data is unaffected, this allows a "management signal" to get through. The act of turning off the laser of the head end transmitter can be thought of a reset instruction sent at the physical layer (OSI model layer 1) in which the physical layer itself is interrupted, which usefully avoids a dependence on sufficient communications still running in upper layers to operate a reset.

In an implementation, an LOS alarm is generated so that the initiation of the process of resetting its microprocessor and/or the power supply is initiated by the LOS signal. In the context of the invention, the LOS alarm serves as a dedicated monitoring guard to detect a reset instruction sent from the head end. This enables the functionality initiating the reset to refer to a signal which allows for better identification that a reset is requested, compared to the simple loss of light. In preferred applications, the reset signal takes even less ambiguous forms, such as turning off the transmitter for a predetermined period of time, or in the form of pulsed light in a sequence pattern comprising predetermined on/off sections of different durations. These would help the remote end node to positively identify a reset instruction or request. A number of different sequence patterns could be used, each being associated with a different reset instruction type to cause different routines to be carried out at the remote end. For example, a first sequence pattern could initialise the reset of the microcontroller, while another initialises the reset of the power supply unit. It would be desirable to be able to try different reset routines, e.g. sequentially, in the event that one reset routine fails to correct the fault causing the problem at the remote end.

In a preferred application, a microcontroller reset is obtained by using a high level interrupt and/or a watchdog timer. As is known, there are a number of ways to cause a reset, such as by power cycling, putting a signal into the microcontroller, and so on, which the skilled person would appreciate to be within the scope of the invention.

In a typical set up, a management functionality is connected to the head end node. In such case, the reset instruction can originate from the head end node itself, or from the management centre.

According to a further aspect of the invention there is provided an optical link comprising a first node having a transmitter optically connected to a second node having a microcontroller and a power supply, the transmitter being configured to be turned off to cause a loss of signal received at the second node, the second node being configured to initiate the restart either of or both the microcontroller or the power supply at the second node in response to the loss of signal.

The optical link preferably includes a dedicated sequence recognition unit or circuit which takes over the function of recognising a specific reset instruction for a specific function or reset routine, and to initiate the process for such reset.

The invention will now be described, by way of example only, with reference to the following drawings in which:
Figure 1 is a block diagram of a conventional point-to-point optical data link,
Figure 2 is a flow diagram depicting the process sequence of the invention,
Figure 3 is a block diagram of a conventional NTE,
Figure 4 schematically depicts process flows of an NTE according to the invention,
Figure 5 schematically depicts process flows of an NTE including a sequence recognition circuit,
Figure 6 schematically depicts process flows of an NTE for resetting the power supply,
Figure 7 is a block diagram of a sequence recognition circuit, and
Figure 8 depicts a timing diagram for a transceiver.

As discussed above, Figure 1 depicts the components and configuration of a known optical point-to-point link which is receives in-band management messages from a management centre (10) such as an element management system (EMS) via one of the NTEs (2).

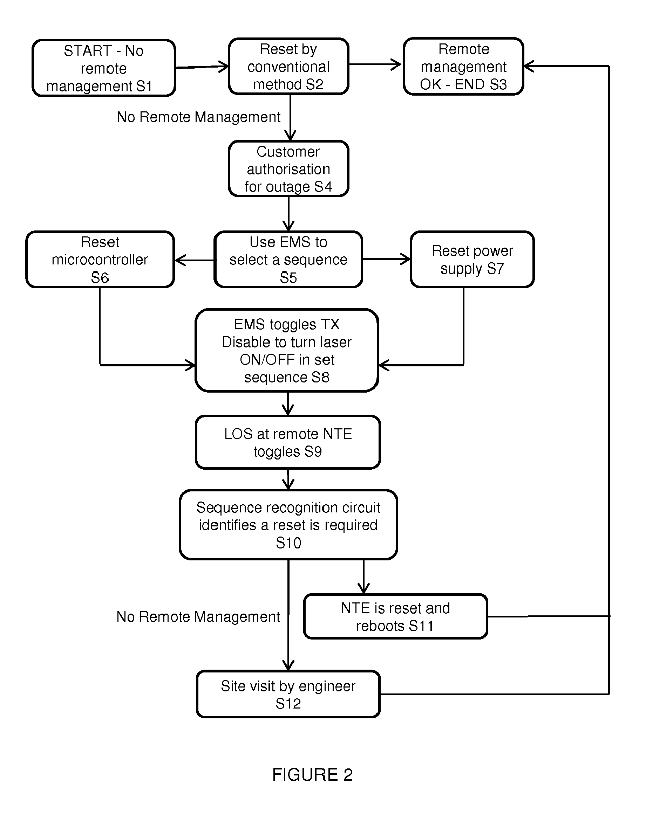

Figure 2 describes the process according to an application of the invention, in which steps take place at each end of the fibre link (6), i.e. at the head end node (2) and the remote end node (4). In implementations of the invention, an LOS alarm is artificially induced at the remote end even though the NTE has not actually lost communication of customer data. This is all carried out at the physical layer by briefly disabling the transmitter at the head end and so introducing an LOS at the remote end NTE. A reset at the physical layer will address causes of the problem at that layer as well as all the higher layers, i.e. potentially all issues causing the remote NTE to be become unreachable for purposes of in-band management. Essentially, this is because a physical layer reset results in a full reset of all layers, e.g. by restarting/resetting the device.

In the exemplary application illustrated in Figure 2, the remote end NTE (2) is in a "frozen" state in starting step S1, wherein no in-band messages can be received so that no management functions can be carried out. At this point the network operator takes a decision to reset the head end node, or else the system can be set up to automatically initiate the process e.g. based on the existence of pre-defined conditions. A number of preliminary steps (steps S2 to S4) can be optionally carried out. In step S2, an initial attempt is made to resolve the problem by using known application layer approaches by using an SNMP trap or HTTPS. If the cause of the problem resides in layer 7, such methods may work to reset of the NTE and restore remote in-band management (step S3), in which the case the process ends there. If this fails so that remote management remains unavailable, the process moves to the steps of sending the physical layer signal to the remote NTE. A lower layer method such as the physical layer is independent of the higher layers and so can be used to communicate and perform a reset irrespective of what has occurred in the layers above. For example if the SNMP agent has the incorrect settings or a corruption preventing communication the transmitter and receiver at the physical layer (in an optically linked network) will still be operating and can be used to initiate a reset. Accordingly, some instances of remote NTEs or nodes which are unreachable for management functions cannot be "un-frozen" using application layer approaches such as SNMP trap or HTTPS.

In a preferred application, the customer is given advance notice of the imminent service outage in optional step S4, as part of which the customer's preference for the time of outage may be specified (e.g. when the expected traffic levels are low or non-existent e.g. at 2 am).

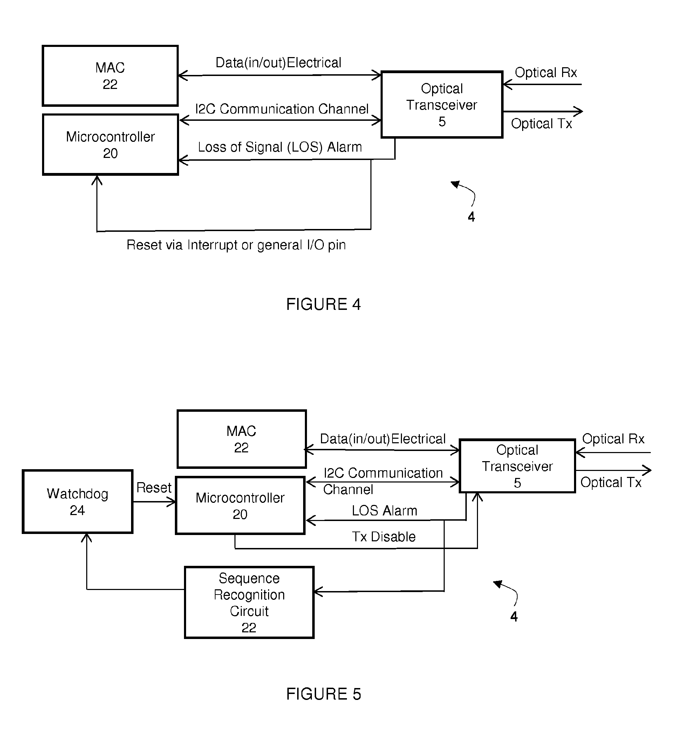

During this part of the process, an instruction from the head end is sent to the remote end for the reset of the remote end NTE and/or the power supply to the NTE. This is initiated by powering down the laser of the head end transceiver (3) e.g. by using the transceiver's TX Disable pin at the head end. This can be initiated by the management centre or EMS (10) operatively connected to the head end node (2) automatically upon the existence of pre-defined conditions, or on the network operator's ad hoc decision. The resulting loss of light received at the remote end NTE causes an LOS alarm to be generated at the remote end in step S9. As previously noted, this is an artificial, or even false, alarm insofar that the signal or connection between the NTEs has not actually been lost for the purpose of transmission of customer data. Upon generation of the LOS alarm signal, the NTE undergoes a series of internal steps which will be detailed below in connection with Figures 4 to 6, to obtain its reset. Because the LOS alarm is generated at the physical layer (the lowest layer in the OSI model) any higher layer prevention of a reset can be addressed. This reset involving either just resetting the microcontroller, or by powering down the whole NTE, is likely to putting the NTE back into a manageable state. The entire process is initiated by the loss of signal at the remote end, which may be viewed as a type of reset instruction from the head end.

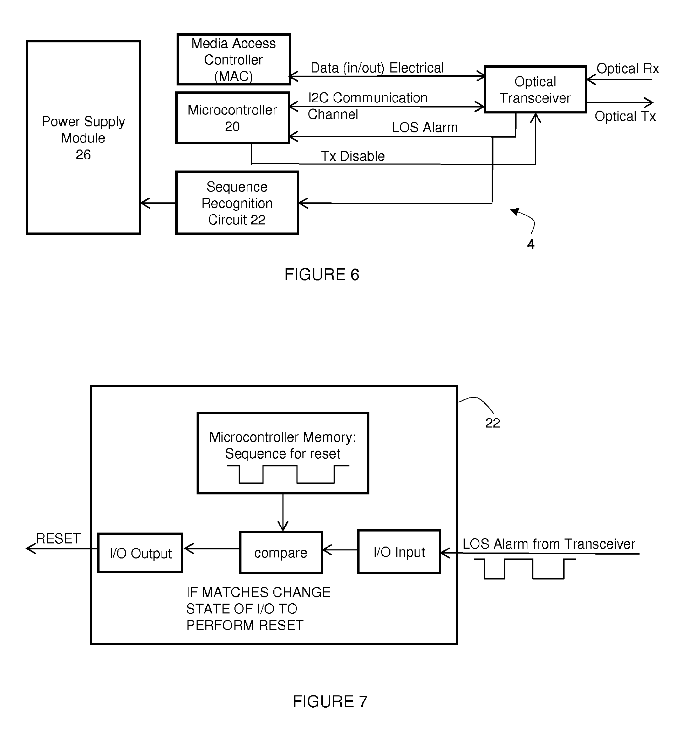

Because service to the customer is lost during the time when the head end laser is turned off, a preferred approach is to turn the head end transceiver off for a pre-defined period rather than to turn it off completely for an indefinite period until the reset is obtained. The LOS alarm is generated for a duration coinciding with the signal outage from the head end. To reduce the period of data outage even further, the TX Disable pin of the head end transceiver is toggled so that the transceiver is repeatedly turned on and off in short order in step S8, resulting in the transmission of a sequence of light pulses to the remote end. Here, the remote end node is configured to recognise the resultant toggled LOS alarm generated. In an application, this is carried out using a sequence recognition circuit (24 in Figure 5), which will be described in greater detail in connection with Figures 4 and 7.

In a further preferred implementation, the reset instruction from the head end takes the form of a pre-defined light toggle sequence comprising a series of on/off periods of different lengths. Such a toggle sequence with a specific pattern helps the remote end NTE to distinguish between a reset instruction signal according to the invention, and other light flicker sequences received by the NTE at the remote end. An example of such other light sequences (i.e. not reset instructions) are genuine or true LOS alarms raised in normal operation due to fibre issues: these are generally long on/off sequences, although "flapping" LOS alarms comprising a quick sequence of on and off pulses are known. In contrast, sending light pulses in a specific recognisable sequence or pattern can diminish or avoid misinterpretation at the remote end.

In further implementations, toggle sequences of recognisably different patterns can be used to instruct the remote end NTE to take different courses of action in dependence on what needs to be done to overcome different underlying causes of the problem. As previously noted, the remote end NTE can freeze for a variety of reasons. For example, if the microcontroller (20 in Figure 3) of the remote NTE needs resetting (step S6), this can be obtained in a number of ways, e.g. by directly resetting it via an I/O pin configured with a high level interrupt or by using a watchdog timer; these will be described in greater detail below in connection with Figures 4 and 5. In circumstances where resetting the microcontroller does not retrieve the NTE from its frozen state, then a power down reset or power cycle will be required. This can occur when the microcontroller's firmware is corrupt from a patch or has entered an ambiguous state due to a coding error from which it cannot recover itself and any high level interrupt will have no effect. In this instance the frozen state at the remote end (step S7) has to be addressed in a different way: this will be detailed below in connection with Figure 6. Yet other reset types to address other problem types are possible.

The skilled person would appreciate that the steps for power down reset can be effected either as a first step (i.e. without first attempting to reset the microcontroller), or as subsequent step when the initial microcontroller reset fails to solve the problem. Where more than one reset routine is available, the exemplary process depicted in the flowchart of Figure 2 includes a step (step S5) of selecting a suitable toggle sequence depending on the action needed to address the particular problem. For example it will generally be preferred to attempt a reset of the microcontroller first as this will have less effect on the data link as the only interruption will be the duration of the LOS being toggled, in the region of a few micro seconds. If this has no affect a power supply reset can be used but this will result in a longer outage as the entire NTE is powered down and powered back up and the management and transmissions functions brought back online. This could be measured in the region of minutes. The skilled person would appreciate that different toggle sequences can be carried out one after another, in the event that earlier approaches do not work to obtain the reset of the remote NTE, by looping from step S11 back to step S5 until the NTE is reset.

After the EMS or the network operator selects a desired toggle sequence in step S5, the near end laser is turned on and off in the selected sequence at step S8 which is received at the far end, causing generation of a LOS alarm at OSI layer 1 in step S9. The LOS toggle sequence received by the microcontroller (20 in Figure 3) of the remote end NTE is recognised as a reset instruction in step S10, which in one implementation is the task of the sequence recognition circuit (24 in Figure 5) at the remote end (although this can be operatively located elsewhere). The sequence recognition unit will be described in more detail below in connection with Figures 4 and 7. Following the generation of the LOS alarm, the head end goes through a routine directed to the reset of the NTE. The exact steps depend on which reset routine is selected, which are discussed further below. Upon completion of the reset routine, the remote NTE hopefully successfully resets and reboots in step S11, and the process ends (step S3). In the event that it fails to reset, another reset instruction can be sent by iterating the process from step S5 as mentioned above, until all available reset activity options are exhausted. As a next step, the process moves to step S12 in which an engineer is despatched to the customer premises to solve the problem and the process ends (step S3). Advantageously, going through the above process helps to weed out the cases which can be more easily remedied by a simple rebooting of the NTE, so that site visits are reserved for the more difficult cases stemming from problems which may even require replacement of a fatally faulty NTE.

Turning now to the configuration of the apparatus and components needed to realise the above implementations of the invention, there is depicted in Figure 3 a known standardised optical transceiver interface making up an NTE (2, 4). Each NTE hosts an optical transceiver (3, 5) for transmitting and receiving data over an optical fibre (6 in Figure 1), a microcontroller (20) and a media access controller (MAC) (22). The NTE components are typically connected to, and communicate with, each other as follows: an electrical data between the transceiver and the MAC unit; an inter integrated circuit communications signals channel (I2C) bus between the transceiver and the microcontroller (20); a channel for transmission of LOS alarms from the transceiver to the microcontroller in the event of loss of communications outside the NTE; and control of the transceiver laser by the microcontroller in the form of TX Disable activity. In the event of a loss of connection, the LOS alarm received by the microcontroller causes it to raise an alarm usually via SNMP to the head end that light is no longer being received. The LOS can also be used to trigger link loss forwarding wherein the NTE shuts down the client link from the NTE to prevent any corrupt data being transmitted.

Figures 4 and 5 are block diagrams of an NTE configured for use at the remote end (4) in a point-to-point link such as that depicted in Figure 1. They are specifically directed to resetting the microcontroller which might freeze due to coding errors for example entering an infinite loop, or a deadlock where in multitasking task gets stuck awaiting an external signal that does not occur or software patching problems etc. A service outage can be expected to last a few microseconds as the microcontroller can be reset without affecting the transmission of traffic and so only the time of the headend laser being toggled will contribute to the service outage. Here, receipt of the reset instruction from the head end results in the generation of an LOS alarm at the remote end which is received by the microcontroller from the transceiver. The microcontroller is, in this application, configured to monitor and recognise the LOS signal as a reset instruction, and in response it resets itself directly by initiating a function that will reload its runtime configuration or a saved configuration as is preferred or by using a high level interrupt command to initiate the same.

As an alternative to using the microcontroller in this way, a dedicated component can be used to for the specific task of recognising a LOS alarm serving as a reset instruction, such as the sequence recognition circuit (22) depicted in Figure 5. This configuration further includes a watchdog timer (24) also for resetting the microcontroller. The sequence recognition circuit can be arranged to feed into the microcontroller in the Figure 4 arrangement to obtain the microcontroller reset. Here, the LOS signal is recognised and used to force the watchdog to reset the microcontroller. This is useful as in some instances the microcontroller is unaware that there is a problem for example when in multitasking a service hang occurs whilst awaiting an external signal and will be resetting the watchdog and hence the timer never reaches zero and a reset is not performed. This sequence recognition circuit will force the reset.

Figure 6 depicts another embodiment of an NTE for deployment at the remote end (4). This configuration serves to reset the power supply unit (26) used by the NTE as briefly mentioned above, to recover from the situation where for example the microcontroller is locked and not responding due to a firmware issue. The sequence recognition circuit interfaces with a reset pin on the power supply module (usually reset low voltage) or can be configured to interface directly to a switch on the supply itself that disconnects the external input voltage from the power supply module before reinstating it. A complete reboot of the power supply module will typically cause a service outage in the order of minutes, in addition to the time when the head end laser has been powered down.

As noted above, it is possible to incorporate the various components and functionalities shown in Figures 4 to 6 so that a single NTE can be instructed to undergo a number of different reset routines to unlock, reset and/or reboot the frozen component by e.g. selection of different light sequences at the head end to generate toggled LOS alarms at the far end.

Figure 7 is a block diagram of the elements making up a sequence recognition circuit (22) of the type discussed against Figures 5 and 6 above. The circuit can monitor via a logic input (e.g. TTL) or an analogue to digital converter channel if a microcontroller is used. The sequence is identified using simple logic by comparing the detected sequence with a database of sequences held in memory. The sequence recognition function could be hosted in the NTE's own microcontroller or removed to a separate circuit as shown here to allow higher level of performance in terms of becoming frozen or unmanageable or even adding to the host's complexity. The circuit can comprise of a low-cost, low speed microcontroller with limited input/output capacity just sufficient for the relatively simple task of matching the sequence or patterns. Even such microcontrollers are typically able to also process and store a number of LOS sequences needed to effect different reset routines required to unfreeze different components, originating from different manufacturers, and caused by different problems residing at various layers of the OSI model. The skilled person would appreciate that this sequence recognition functionality can be provided in different ways from that depicted: e.g. the circuit can be designed using individual logic gates to lower the cost of the circuit, although this will not have the ability to store multiple patterns to recognise.

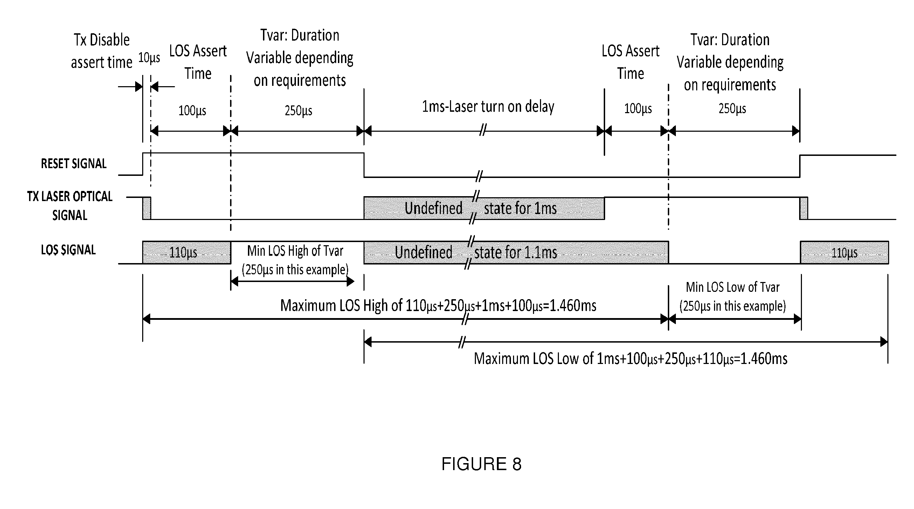

The Tx Disable and LOS alarm signals are defined by an MSA (INF-8074i Specification for SFP (Small Form Factor Pluggable) Transceiver) and hence maximum timings have to be conformed to by all transceivers to ensure accurate signal recognition. It is known that due to the head end laser turn on/off times and the time taken for the remote end transceiver to process the LOS signal, that there is latency in the system proposed herein. In an example where:
Tx Disable: t_{off} 10µs, tₒₙ 1 ms (max figures)
LOS: 100µs delay for on and off (max figures)
when the TX disable is enabled to turn off the laser and produce a LOS alarm of Logic 1 or high at the far end transceiver, it could take a maximum of 10µs + 100µs (maximum) before the LOS signal responds. When the Tx Disable pin is disabled it can take a maximum of 1 ms before the laser transmits light and the LOS can take 100µs to respond and revert to logic 0 or low to indicate normal operation once the light is received. So a maximum time of 1.1ms could occur. (The speed of light in the fibre is assumed to be negligible over the distances that the propose system uses.) For sequence recognition, a signal which drives the TX Disable needs to be longer than 110µs before the LOS signal responds. To take the LOS low the pulse needs to be longer than 1.1 ms. For purposes of optimisation and to enable reliable recognition by the sequence recognition circuit therefore, a sequence needs to take into account the LOS and Tx Disable latency and hence "undefined" states. Figure 8 shows an example of this timing, illustrating the constraints that need to be put on the reset signal for an SFP.

The methods, devices and configurations described above and in the drawings are for ease of description only and not meant to restrict the invention to any particular embodiments. It will be apparent to the skilled person that various sequences and permutations on the methods and devices described are possible within the scope of this invention as disclosed. For example, the light sequence patterns could comprise light transmissions of predetermined varying intensity, as well as different durations.

The skilled person would appreciate that the invention has application in circumstances where not just management functions are lost, but where even customer data cannot be sent or received. In the case of a node located in an extremely remote, or an unmanned site, for example, implementations of the invention may be able to usefully obtain a reset of the NTE functions without need to despatch an engineer. As long as the optical link remains intact so that light from the head end can be received at the far end (regardless of what, if any, type of data is being carried), this approach can be deployed as a precursor to a site visit.

The skilled person would also appreciate that although the invention is herein described in the context of a point to point link, that it can nonetheless be applied in a point to multipoint link to obtain the stated benefits. Even though in operation all remote end nodes would suffer from loss of signal, there may be circumstances in which such a penalty is worth paying for e.g. in remote locations, or where the authority of the other remote end users has been obtained.

## Claims

1. A method of operating an optical link comprising a first node having a transmitter optically connected to a second node having a microcontroller and a power supply, comprising:
- turning off the transmitter of the first node to cause a loss of signal received at the second node, and
- initiating a restart of either of or both the microcontroller or the power supply at the second node in response to the loss of signal.

2. A method according to claim 1 further comprising generating an alarm in response to the loss of signal at the second node, and initiating a restart of either of or both the microcontroller or the power supply at the second node in response to the generation of the alarm caused by the loss of signal.

3. A method according to any preceding claim further comprising turning the transmitter back on after a predetermined lapse of time.

4. A method of according to claim 3 comprising turning the transmitter off and on repeatedly in a sequence pattern.

5. A method according to claim 4 further comprising selection from a number of different sequence patterns to select between initiation of a restart of the microcontroller or the power supply.

6. A method according to claim 5 wherein different sequence patterns are selected iteratively.

7. A method according to any preceding claim wherein initiating the restart of the microcontroller comprises using either of or both of a high level interrupt or a watchdog timer.

8. A method according to any preceding claim wherein a management centre operatively connected to the first node initiates turning off the transmitter of the first node.

9. An optical link comprising a first node having a transmitter optically connected to a second node having a microcontroller and a power supply, the transmitter being configured to be turned off to cause a loss of signal received at the second node, the second node being configured to initiate the restart either of or both the microcontroller or the power supply at the second node in response to the loss of signal.

10. An optical link according to claim 9 wherein the second node is configured to generate an alarm in response to the loss of signal and to initiate the restart either of or both the microcontroller or the power supply at the second node in response to the alarm caused by the loss of signal.

11. An optical link according to claim 9 or claim 10 further comprising a store of a plurality of sequence patterns each comprising a predetermined sequence of turning the transmitter off and on repeatedly.

12. An optical link according to any one of claims 9 to 11 wherein the store comprises a sequence recognition unit, further configured to initiate the restart either of or both the microcontroller or the power supply at the second node.

13. An optical link according to claim 12 further comprising a watchdog timer operatively connected to the sequence recognition unit for initiating the restart of the microcontroller.

14. An optical link according to any one of claims 9 to 13 wherein the first node is operatively connected to a management centre, the transmitter being configured to be turned off in response to a signal from the management centre.
